# EUROPÄISCHE PATENTSCHRIFT

(11) **EP 3 571 400 B1**
(45) Veröffentlichungstag und Bekanntmachung des Hinweises auf die Patenterteilung: **24.03.2021**
(21) Anmeldenummer: 18701151.5
(22) Anmeldetag: 19.01.2018
(51) Int. Cl.: F03D 80/50, F03D 7/02

(54) **VERFAHREN ZUM DREHEN DES ROTORS EINER WINDENERGIEANLAGE**
METHOD FOR ROTATING THE ROTOR OF A WIND TURBINE
PROCÉDÉ PERMETTANT DE FAIRE TOURNER LE ROTOR D'UNE ÉOLIENNE

(30) Priorität: 19.01.2017 DE 102017000435
(43) Veröffentlichungstag der Anmeldung: 27.11.2019
(73) Patentinhaber: Siemens Gamesa Renewable Energy Service GmbH, 22297 Hamburg (DE)
(72) Erfinder: FISCHER, Roland, 25873 Rantrum (DE)
(74) Vertreter: Glawe, Delfs, Moll
(86) Internationale Anmeldenummer: PCT/EP2018/051256
(87) Internationale Veröffentlichungsnummer: WO 2018/134331

(56) Entgegenhaltungen:
- EP-A2- 1 167 754
- US-A1- 2010 014 969
- US-A1- 2012 294 715
- US-A1- 2015 275 854

## Beschreibung

Die Erfindung betrifft ein Verfahren zum Drehen des Rotors einer Windenergieanlage bei Windstille bzw. geringem, zum Antrieb des Rotors unzureichendem Wind.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann. Der Rotor umfasst mehrere (in der Regel drei), sich im Wesentlichen radial von der Rotorachse erstreckende Rotorblätter, die gegenüber einer Rotornabe drehbar befestigt sind, um den Anstellwinkel der Rotorblätter einzustellen.

Bei verschiedenen Wartungs- und Reparaturarbeiten an einer Windenergieanlage muss der Rotor in eine vorgegebene Position bewegt und dort arretiert werden. Herrscht ausreichender Wind können die Rotorblätter der Windenergieanlage so in den Wind gedreht werden, dass sich der Rotor dreht und in der gewünschten Position von einer Bremse angehalten wird. Die Bremse kann in der Folge angezogen bleiben und so die gewünschte Feststellung erreichen. Es ist aber auch möglich, noch eine gesonderte Arretiervorrichtung vorzusehen. Entsprechendes ist beispielweise in der WO 2005/090780 A1 offenbart.

Um jedoch zur Arretierung des Rotors in einer bestimmten Position nicht zwingend auf ausreichend Wind angewiesen zu sein, besteht das Bedürfnis, den Rotor einer Windenergieanlage auch bei Windstille bzw. nur geringem, zum Antrieb des Rotors unzureichenden Wind zu drehen.

Im Stand der Technik sind dazu sog. Törnantriebe bekannt, die bei Bedarf auf die Welle des Rotors ein Drehmoment ausüben können, um so den Rotor in Drehung zu versetzen. Die Törnantriebe können dabei fest in der Windenergieanlage installiert oder aber als mobile Vorrichtungen ausgestaltet sein, die nur bei Bedarf mit der Welle der Windenergieanlage verbunden werden. Törnantriebe sind aber teuer und insbesondere als mobile Vorrichtung teilweise derart unpraktisch, dass sie von Monteuren nicht immer genutzt werden, selbst wenn dies grundsätzlich angezeigt wäre.

Anstelle der Verwendung eines Törnantriebs wird dann häufig versucht, den Rotor von Hand zu drehen. Dabei wird die Bremsscheibe der Rotorbremse gegriffen und in tangentialer Richtung daran gezogen. Den Rotor einer Windenergieanlage so in eine ausreichende Drehbewegung zu versetzen, ist allerdings sehr anstrengend und darüber hinaus auch noch äußerst gefährlich.

Das Dokument US 2010/014969 A1 offenbart, dass der Schwerpunkt von Rotorblättern einer Windenergieanlage außerhalb der Pitchachse des jeweiligen Rotorblatts liegen kann.

Aufgabe der vorliegenden Erfindung ist es, ein Verfahren zum Drehen des Rotors einer Windenergieanlage bei Windstille bzw. geringem, zum Antrieb des Rotors unzureichendem Wind zu schaffen, bei der die Nachteile aus dem Stand der Technik nicht mehr oder nur noch im verminderten Umfang auftreten.

Gelöst wird diese Aufgabe durch ein Verfahren gemäß dem Hauptanspruch, ein Computerprogramm-Produkt gemäß Anspruch 12 und eine Windenergieanlage gemäß Anspruch 13.

Demnach betrifft die Erfindung ein Verfahren zum Drehen des Rotors einer Windenergieanlage bei Windstille bzw. geringem, zum Antrieb des Rotors unzureichendem Wind, mit einem um eine Rotorachse drehbaren Rotor umfassend wenigstens drei Rotorblätter, deren Schwerpunkt jeweils außerhalb der Drehachsen zur Einstellung des Blatteinstellwinkels der einzelnen Rotorblätter liegt, wobei der Blatteinstellwinkel eines ersten Rotorblattes zur Erzeugung einer Unwucht im Rotor derart planvoll von dem Blatteinstellwinkel eines zweiten Rotorblattes abweichend eingestellt wird, dass durch die Veränderung der Lage des Schwerpunktes des ersten Rotorblatts ein gravitationsbedingtes Drehmoment um die Rotorachse erzeugt wird.

Weiterhin betrifft die Erfindung ein Computerprogrammprodukt umfassend Programmteile, welche, wenn geladen in einem Computer, und zwar eine Steuerungseinheit einer Windenergieanlage, bewirken, dass die Steuerungseinheit das erfindungsgemäße Verfahren ausführt.

Auch betrifft die Erfindung eine Windenergieanlage mit einem um eine Rotorachse drehbaren Rotor umfassend wenigstens drei Rotorblätter, deren Schwerpunkt jeweils außerhalb der Drehachsen zur Einstellung des Blatteinstellwinkels der einzelnen Rotorblätter liegt, und einer Steuerungseinheit, wobei die Steuerungseinheit zur Durchführung des erfindungsgemäßen Verfahrens ausgebildet ist.

Zunächst werden einige in Zusammenhang mit der Erfindung verwendete Begriffe erläutert.

Der Begriff "gravitationsbedingtes Drehmoment" bezeichnet dasjenige um die Rotorachse auf den Rotor wirkende Drehmoment, welches sich allein aus der Summe derjenigen auf den Rotor einwirkenden Drehmomente ergibt, die auf den Gewichtskräften der Rotorblätter basieren. So sind nur die durch die Masse der Rotorblätter entstehenden Drehmomente auf den Rotor zu berücksichtigen, während sonstige Drehmomente, bspw. aufgrund von Wind, beim gravitationsbedingten Drehmoment nicht zu berücksichtigen sind.

Der Begriff "Rotorwinkel" bezeichnet den momentanen Drehwinkel des Rotors um die Rotorachse gegenüber einer vorgegebenen 0°-Stellung. Häufig wird als 0°-Stellung eine Lage des Rotors gewählt, in der eines der daran angeordneten Rotorblätter senkrecht nach oben steht. Bei diesem Rotorblatt kann es sich bspw. um das erste Rotorblatt handeln.

Mit "Losbrechmoment" ist das Moment bezeichnet, welches bei einer Drehbewegung aufgewendet werden muss, um die bei Stillstand bestehende Haftreibung zu überwinden.

Die Erfindung hat erkannt, dass sich bei einem Rotor, der im Normalbetrieb, bei dem alle Rotorblätter auf den gleichen Blatteinstellwinkel eingestellt sind, im Wesentlichen ausgewuchtet ist, durch einen ungleichen Blatteinstellwinkel zwischen einzelnen Rotorblättern eine Unwucht erzeugt werden kann, die letztendlich zu einer Drehbewegung des Rotors führt. Dabei macht sich die Erfindung zu Nutze, dass der Schwerpunkt eines Rotorblatts im Regelfall nicht auf derjenigen Achse liegt, um die es zur Einstellung des Blatteinstellwinkels gedreht wird, sondern beabstandet davon ist. Letztendlich kann durch eine Drehung des Rotorblatts um diese Achse der Hebelarm zwischen Schwerpunkt des Rotorblatts und Rotorachse verändert werden, wodurch sich aufgrund der Masse des Rotorblatts auch das auf den Rotor ausgeübte Drehmoment verändert. Überraschenderweise hat sich gezeigt, dass die eigentlich geringe Schwerpunktexzentrizität bei heutigen Windenergieanlagen ausreichend sein kann, um ein aufgrund der Reibungskräfte im Triebstrang entstehendes, mindestens erforderliches Losbrechmoment zu überwinden. Es ist bevorzugt, wenn die Veränderung des Blatteinstellwinkels des ersten Rotorblattes oder aller Rotorblätter derart erfolgt, dass das daraus resultierende gravitationsbedingte Drehmoment ausreichend ist, ein aufgrund der Reibungskräfte im Triebstrang bestehendes Losbrechmoment zu überwinden.

Zum Beispiel kann so ausgehend von einem ruhenden, im Drehmomenten-Gleichgewicht befindlichen Rotor, bei dem die Rotorblätter alle den gleichen Blatteinstellwinkel aufweisen, durch die Einstellung unterschiedlicher Blatteinstellwinkel und der damit verbundenen Veränderung der Schwerpunktlage der einzelnen Rotorblätter eine Unwucht und somit gravitationsbedingt regelmäßig ein Drehmoment um die Rotorachse erzeugt werden, welches größer ist als das Losbrechmoment und letztendlich zu einer Drehbeschleunigung des Rotors führt. Dadurch lässt sich der Rotor der Windenergieanlage drehen, ohne dass es von außen angreifender Kräfte durch Wind, Törnantrieb oder die Muskelkraft eines Monteurs bedarf.

Der Blatteinstellwinkel wenigstens des ersten Rotorblatts wird vorzugsweise derart in Abhängigkeit des Rotorwinkels verändert, dass das sich aus der so erzeugten Unwucht ergebende Drehmoment in eine vorgegebene Richtung um die Rotorachse wirkt. Ist der Blatteinstellwinkel des ersten Rotorblatts gegenüber einem zweiten Rotorblatt abweichend eingestellt, ergibt sich - wie dargelegt - ein Drehmoment und daraus eine Drehbewegung des Rotors. Mit dieser Drehbewegung verändert sich jedoch auch die Lage der Rotorblätter gegenüber der Rotorachse und somit die durch die Masse der Rotorblätter auf die Rotorachse jeweils aufgebrachten Drehmomente sowie das resultierende gravitationsbedingte Drehmoment. Bliebe der Blatteinstellwinkel der Rotorblätter nach einer anfänglichen Einstellung bei einer solchen Drehung unverändert, würde die Drehbewegung zu einem Stillstand kommen, wenn der Gesamtschwerpunkt des Rotors sich unter die Rotorachse bewegt hat oder es würde aufgrund der gleichbleibenden statischen Unwucht zu einer Pendelschwingung des Rotors um die Rotorachse kommen. Indem der Blatteinstellwinkel wenigstens des ersten Rotorblatts aber in Abhängigkeit von dem Rotorwinkel und somit der Lage des jeweiligen Rotorblatts planvoll verändert wird, ist es möglich, dass das resultierende gravitationsbedingte Drehmoment dauerhaft in eine vorgegebene Richtung um die Rotorachse wirkt. Die Veränderung des Blatteinstellwinkels wenigstens des ersten Rotorblatts in Abhängigkeit des Rotorwinkels kann dabei durch eine mathematische Funktion oder durch eine Kennlinie abgebildet werden.

Es ist bevorzugt, wenn insbesondere bei einem ruhenden Rotor die Drehachse zur Einstellung des Blatteinstellwinkels des ersten Rotorblatts zur Erzeugung einer Unwucht um wenigstens 5°, vorzugsweise um wenigstens 10°, weiter vorzugsweise um wenigstens 20° von der Horizontalen abweicht. Für die Erzeugung eines Drehmoments durch die mittels einer Drehung des ersten Rotorblatts zur Einstellung des Blatteinstellwinkels hervorgerufene Schwerpunktverschiebung ist allein deren Projektion auf eine Ebene senkrecht zur Rotorachse relevant. In dieser Ebene erfolgt die Schwerpunktverschiebung ausschließlich senkrecht zur Drehachse des Rotorblatts. Ist diese Drehachse im Wesentlichen horizontal oder nahezu horizontal, entsteht aus einer Veränderung des Blatteinstellwinkels dieses Rotorblatts keine oder nur eine kleine Drehmomentveränderung. In diesem Fall ist es vorzuziehen, wenn ein anderes Rotorblatt des Rotors das erste Rotorblatt im Sinne der Erfindung ist. Wie bereits angedeutet gilt dies insbesondere bei einem ruhenden Rotor, der erst durch die erfindungsgemäße Erzeugung einer Unwucht in Drehung versetzt werden soll. Ist bereits eine Drehbewegung vorhanden, kann das erste Rotorblatt hingegen ohne weiteres einen Durchgang durch eine horizontale Lage vollziehen, in welcher zwar im Regelfall kein zusätzliches Drehmoment durch dieses Rotorblatt auf den Rotor ausgeübt wird, nach erfolgtem Durchgang durch die horizontale Lage das erste Rotorblatt jedoch wieder zur Erzeugung eines entsprechenden Drehmomentes auf den Rotor dienen kann.

Es ist bevorzugt, wenn die Blatteinstellwinkel von wenigstens zwei, vorzugsweise aller Rotorblätter in Abhängigkeit des Rotorwinkels derart verändert werden, dass die Unwucht des Rotors gegenüber der Veränderung des Blatteinstellwinkels lediglich eines Rotorblattes vergrößert ist. In anderen Worten sollen die Blatteinstellwinkel sämtlicher Rotorblätter in Abhängigkeit des Rotorwinkels derart eingestellt werden, dass sich durch die jeweilige Verschiebung des Schwerpunktes der einzelnen Rotorblätter ein größeres resultierendes gravitationsbedingtes Drehmoment ergibt. So kann bspw. durch geeignete Drehung einzelner Rotorblätter, der jeweilige Hebelarm verlängert werden, wenn dadurch das jeweils auf die Rotorachse einwirkende Drehmoment in die vorgegebene Richtung des gewünschten resultierenden Drehmomentes zeigt, während der Hebelarm bei denjenigen Rotorblättern verringert wird, die ein Drehmoment entgegen der vorgegebenen Richtung des gewünschten resultierenden Drehmomentes auf den Rotor aufbringen.

Das erfindungsgemäße Verfahren kann insbesondere genutzt werden, den Rotor in eine vorgegebene Winkelposition zu verfahren, in der dieser dann bspw. arretiert werden kann. Um dies zu ermöglichen, wird vorzugsweise der Rotorwinkel überwacht und die Unwucht im Rotor bereits vor dem, spätestens jedoch beim Erreichen der vorgegebenen Winkelposition reduziert oder eliminiert. Dadurch wird das auf den Rotor einwirkende gravitationsbedingte Drehmoment reduziert oder entfällt vollständig, woraufhin der Rotor zumindest aufgrund von Reibungsverlusten abbremst und letztendlich zum Stillstand kommen kann. Auch wenn der Rotor grundsätzlich bereits allein durch eine entsprechende Regelung der Unwucht in eine gewünschten Winkelposition gebracht werden kann, ist es bevorzugt, wenn zusätzlich oder alternativ der Rotor durch eine Bremse in der vorgegebenen Winkelposition angehalten wird. Durch die Verwendung einer Bremse ist ein vergleichsweise genaues Anhalten des Rotors in der vorgegebenen Winkelposition möglich. Bei der Bremse kann es sich bspw. um eine für den Nothalt einer Windenergieanlage vorgesehene Bremse handeln. Die Bremse kann auch zum Festsetzen der Windenergieanlage in der vorgegebenen Winkelposition genutzt werden. Alternativ oder zusätzlich kann selbstverständlich auch eine gesonderte Arretierungsvorrichtung vorgesehen sein.

Das Verfahren ist besonders für das Drehen des Rotors einer Windenergieanlage bei Windstille geeignet. Herrscht Wind kann dieser - wie im Stand der Technik bekannt - genutzt werden, um den Rotor zu drehen. Es ist daher bevorzugt, wenn vor - also bevor der Anstellwinkel des ersten Rotorblatts verändert wird - und/oder während der Durchführung des Verfahrens die Windgeschwindigkeit an der Windenergieanlage überwacht wird, und das Verfahren bei Windgeschwindigkeiten über 2 m/s, vorzugsweise über 1 m/s, weiter vorzugsweise über 0,5 m/s abgebrochen wird. Dadurch wird u.a. auch sichergestellt, dass keine unerwünschten und ggf. unvorhergesehenen Kräfte auf den Rotor und die Windenergieanlage einwirken, die aufgrund der unterschiedlichen Anstellwinkel der einzelnen Rotorblätter durch darauf auftreffenden Wind entstehen könnten.

Vorzugsweise wird vor und/oder während der Durchführung des Verfahrens die Rotordrehgeschwindigkeit bzw. die Rotordrehzahl um die Rotorachse überwacht, wobei das Verfahren bei Überschreiten einer vorgegebenen Maximalgeschwindigkeit abgebrochen wird. Durch eine entsprechende Überwachung wird vermieden, dass die erfindungsgemäß erzeugte Unwucht in Kombination mit einer zu hohen Drehgeschwindigkeit des Rotors zu unerwünschten Schwingungen in der Windenergieanlage führt.

Zum Eleminieren der Unwucht und/oder zum Abbruch des Verfahrens können die Anstellwinkel der Rotorblätter identisch zueinander eingestellt werden. Weisen alle Rotorblätter identische Anstellwinkel auf, ist der Rotor im Regelfall ausgewuchtet. Dabei ist besonders bevorzugt, wenn die Rotorblätter in die Fahnenstellung verfahren werden, sodass auch kein durch evtl. aufkommenden Wind induziertes Drehmoment auf den Rotor einwirken kann. Die Einstellung des Blatteinstellwinkels der einzelnen Rotorblätter erfolgt vorzugsweise durch elektrische Blattverstellantriebe. Diese bieten im Vergleich zu bspw. hydraulischen Blattverstellantrieben einen Blattwinkelbereich von ±90° ausgehend von der Normalbetriebsstellung (0°-Stellung) bzw. von 0° bis 180° von der Fahnenstellung, was vorteilhaft für die erfindungsgemäß vorgesehene Erzeugung einer Unwucht - insbesondere bei sich drehendem Rotor - ist.

Auch wenn die erfindungsgemäße vorgesehene Schwerpunktlage außerhalb der Drehachsen zur Einstellung des Blatteinstellwinkels bei einem Rotorblatt durch verschiedene Maßnahmen bis hin zum Anbringen zusätzlicher Ballastgewichte an ausgewählten Stellen des Rotorblatts erreichen lässt, ist bevorzugt, wenn es sich bei den Rotorblättern um vorgebogene Rotorblätter handelt. Es hat sich nämlich gezeigt, dass entsprechende vorgebogene Rotorblätter, deren Biegung originär den Freigang der Rotorblätter vor dem Turm der Windenergieanlage sicherstellen soll, bereits regelmäßig einen für das erfindungsgemäße Verfahren ausreichenden Abstand zwischen Drehachse und Schwerpunkt aufweisen.

Zur Erläuterung des erfindungsgemäßen Computerprogrammproduktes sowie der erfindungsgemäßen Windenergieanlage wird auf die vorstehenden Ausführungen verwiesen.

Die Erfindung wird nun anhand einer vorteilhaften Ausführungsform unter Bezugnahme auf die beigefügten Zeichnungen weiter erläutert. Es zeigen:
- Figur 1:: eine schematische Darstellung einer erfindungsgemäßen Windenergieanlage;
- Figur 2:: eine schematische Darstellung der Gondel der Windenergieanlage aus Figur 1;
- Figur 3:: eine Vorderansicht auf den Rotor der Windenergieanlage gemäß Figuren 1 und 2 im ausgewuchteten Zustand;
- Figur 4:: eine Vorderansicht auf den Rotor der Windenergieanlage gemäß Figuren 1 und 2 mit erfindungsgemäß erzeugter Unwucht;
- Figur 5:: schematische Darstellung der Abhängigkeit des durch ein Rotorblatt induzierten Drehmomentes von dem Blatteinstellwinkel am Beispiel der Windenergieanlage aus Figuren 1 und 2;
- Figur 6:: schematische Darstellung einer Abhängigkeit des Blatteinstellwinkels eines Rotorblatts von dem Rotorwinkel am Beispiel der Windenergieanlage aus Figuren 1 und 2; und
- Figur 7:: Diagramm zur erfindungsgemäßen Erzeugung eines gravitationsbedingten Drehmomentes am Beispiel der Windenergieanlage aus Figuren 1 und 2.

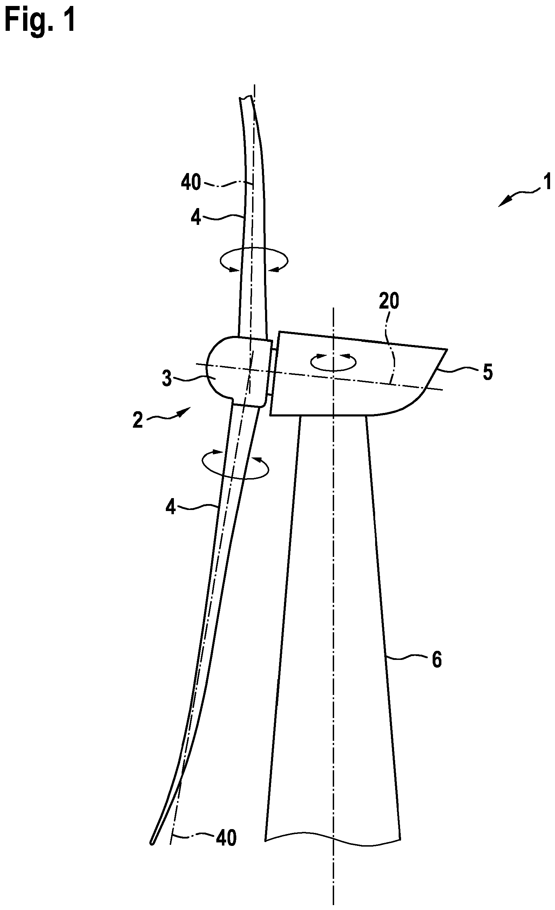

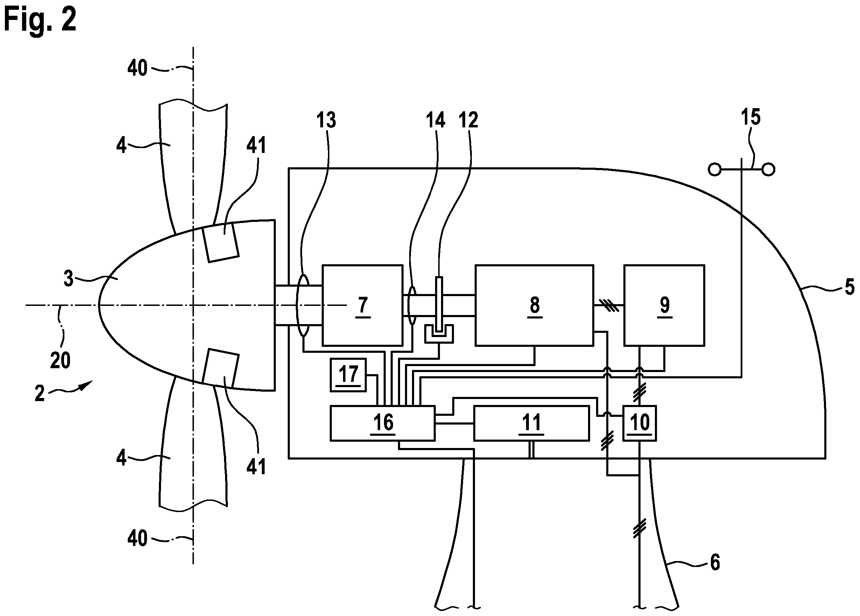

In Figuren 1 und 2 ist eine erfindungsgemäße und damit zur Durchführung des erfindungsgemäßen Verfahrens ausgebildete Windenergieanlage 1 bzw. deren Gondel 5 schematisch dargestellt. Die Windenergieanlage 1 umfasst einen Rotor 2 mit insgesamt drei an einer Rotornabe 3 befestigten Rotorblättern 4. Der Rotor 2 ist dabei drehbar um eine Rotorachse 20 an der Gondel 5 angeordnet, die wiederum über einen Azimutantrieb 11 drehbar um eine senkrechte Achse auf einem Turm 6 angeordnet ist.

Die Rotornabe 3 ist über ein Getriebe 7 mit einem Generator 8 zur Umwandlung von auf den Rotor 2 einwirkender Windenergie in elektrische Energie verbunden. Der Generator 8 ist dabei ein doppelt gespeister Asynchrongenerator, bei dem ein Teil der erzeugten Leistung direkt, ein anderer Teil der Leistung über einen Umrichter 9 und ein Schaltelement 10 zu einem am Fuß des Turmes 6 befindlichen Transformators (nicht dargestellt) geleitet und von dort in ein öffentliches Versorgungsnetz eingespeist wird.

Zwischen dem Getriebe 7 und dem Generator 8 ist weiterhin eine Bremse 12 vorgesehen, mit welcher eine Drehbewegung des Rotors 2 um die Rotorachse 20 abgebremst und der Rotor 2 arretiert werden kann. Darüber hinaus ist eine Vorrichtung 13 zur Ermittlung des momentanen Rotorwinkels, eine Vorrichtung 14 zur Ermittlung der Rotordrehzahl (bzw. der Drehzahl der Welle zwischen Getriebe 7 und Generator 8, die unmittelbar mit der Rotordrehzahl korreliert), sowie eine Vorrichtung 15 zur Ermittlung der Windgeschwindigkeit im Bereich der Gondel 5 und des Rotors 2.

Die in der Gondel 5 angerordneten Komponenten 7-11 der Windenergieanlage 1, die sich steuern oder überwachen lassen, sowie sämtliche Sensoren 13, 14, 15 sind mit einer Steuerungseinheit 16 verbunden, über die der Betrieb der Windenergieanlage 1 gesteuert wird. Die Steuerungseinheit 16 ist programmierbar und umfasst einen Speicher 17, auf dem Steuerungsprogramme abgelegt werden können.

Wie in Figur 1 ersichtlich, sind die Rotorblätter 4 des Rotors 2 vorgebogen, sodass selbst bei Starkwind der Freigang der Rotorblätter 4 vor dem Turm 6 gewährleistet ist. Des Weiteren sind die Rotorblätter 4 jeweils um eine Drehachse 40 hinsichtlich ihres jeweiligen Anstellwinkels einstellbar. Zur Einstellung des Blatteinstellwinkels ist jeweils ein elektrischer Blattverstellantrieb 41 in der Rotornabe 3 angeordnet. Diese Blattverstellantriebe 41 werden ebenfalls von der Steuerungseinrichtung 16 über aus Gründen der Übersichtlichkeit nicht dargestellten Steuerungsleitungen gesteuert. Aus dem Stand der Technik sind hinlänglich Verfahren zum Betreiben der Windenergieanlage bekannt, bei denen der Anstellwinkel der Rotorblätter verändert wird, um bei unterschiedlichen Windbedingungen eine möglichst optimale Energiegewinnung zu erhalten.

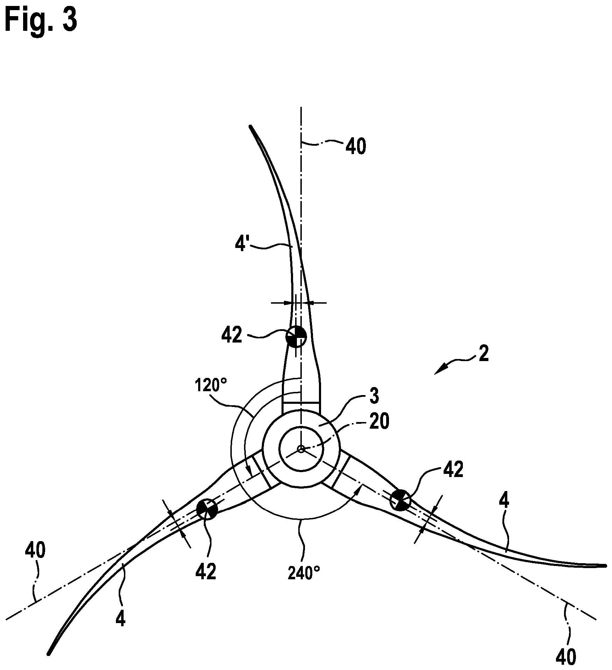

In Figur 3 ist eine Vorderansicht auf den Rotor 2 der Windenergieanlage 1 aus den Figuren 1 und 2 gezeigt, wobei aus Gründen der Übersichtlichkeit auf die Darstellung der Gondel 5 und des Turms 6 verzichtet wurde. Die drei Rotorblätter 4 weisen alle einen Blatteinstellwinkel von 90° auf, befinden sich also in der Fahnenstellung.. Ein Rotorblatt 4 - nämlich das erste Rotorblatt 4' - weist senkrecht nach oben, was hier einem Rotorwinkel von 0° entspricht. In der Folge stehen die anderen Rotorblätter 4 bei 120° und 240°.

Die Rotorblätter 4 weisen jeweils eine Masse von 8000 kg auf, wobei der Schwerpunkt 42 der Rotorblätter 4 jeweils um 20 cm außerhalb der jeweiligen Drehachse 40 liegt. In der in Figur 3 dargestellten 90°-Stellung beträgt der Abstand zwischen Schwerpunkt 42 und Drehachse 40 in der für die senkrecht zur Blattebene verlaufende Rotorachse 20 relevanten Ebene - nämlich der Blattebene - eben diese 20 cm. Im Ergebnis wirken aufgrund der Masse der Rotorblätter 4 jeweils Drehmomente ein, sich bei gleicher Blattwinkeleinstellung der drei Rotorblätter 4 jedoch immer im Gleichgewicht befinden. So werden die gegen den Uhrzeigersinn wirkenden Drehmomente des ersten Rotorblatts 4' und des bei 120° stehenden Rotorblatts 4 durch das Drehmoment des bei 240° stehenden Rotorblatts 4 ausgeglichen. Der Rotor 2 ist demnach ausgewuchtet. Es ist zu beachten, dass der Rotor 2 unabhängig vom Rotorwinkel ausgewuchtet ist, wenn alle Rotorblätter 4 den gleichen Blatteinstellwinkel aufweisen.

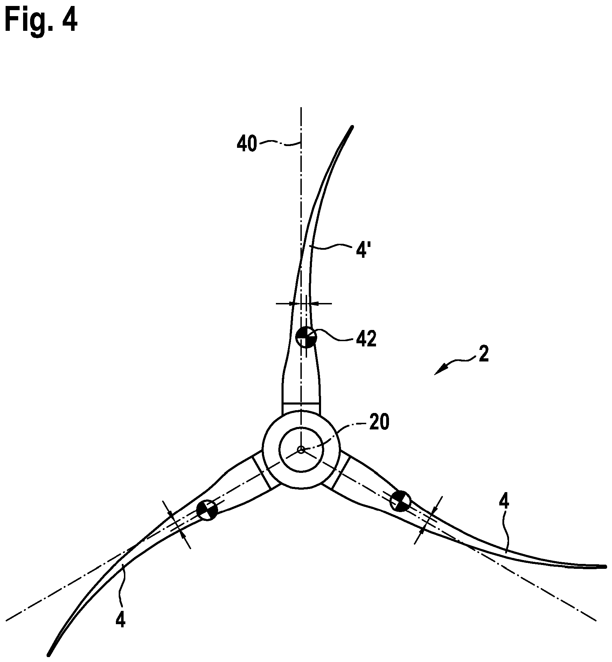

In Figur 4 ist der Rotor 2 aus Figur 3 gezeigt, wobei jedoch der Blatteinstellwinkel des ersten Rotorblattes 4' gegenüber dem Blatteinstellwinkel eines zweiten Rotorblattes - also einem der beiden anderen Rotorblätter 4 - abweichend eingestellt ist. Der Blatteinstellwinkel des ersten Rotorblatts 4' beträgt dabei -90° (die sogenannte negative Fahnenstellung), sodass der Schwerpunkt 42 des ersten Rotorblattes 40 nunmehr mit 20 cm Abstand auf der anderen Seite der Drehachse 40 liegt.

Durch die in Figur 4 dargestellte Einstellung des Blattwinkels des ersten Rotorblattes 4', verändert sich das durch dieses Rotorblatt 4' auf den Rotor 2 eingebrachte Drehmoment, während die durch die anderen Rotorblätter 4 hervorgerufenen Drehmomente gegenüber Figur 3 unverändert geblieben sind. Insbesondere ändert sich die Drehrichtung des durch das erste Rotorblatt 4' induzierte Drehmoment. Dieses Drehmoment wirkt nun nicht mehr entgegen dem Uhrzeigersinn (vgl. Figur 3), sondern vielmehr mit dem Uhrzeigersinn. In der Folge befindet sich der Rotor nicht mehr im Drehmomenten-Gleichgewicht und ein resultierendes gravitationsbedingtes Drehmoment, welches im Uhrzeigersinn wirkt, entsteht. In der Folge wird der Rotor 2 in einer Drehbewegung um die Rotorachse versetzt. Erneut wird darauf hingewiesen, dass es nicht zwingend erforderlich ist, die Richtung des Drehmomentes aufgrund des ersten Rotorblattes 4' zu ändern; eine Reduktion dieses Drehmomentes ausgehend von der Situation gemäß Figur 3 ist in der Regel ausreichend, ein ausreichendes gravitationsbedingtes Drehmoment zu erzeugen, um den Rotor 2 in Drehung zu versetzen.

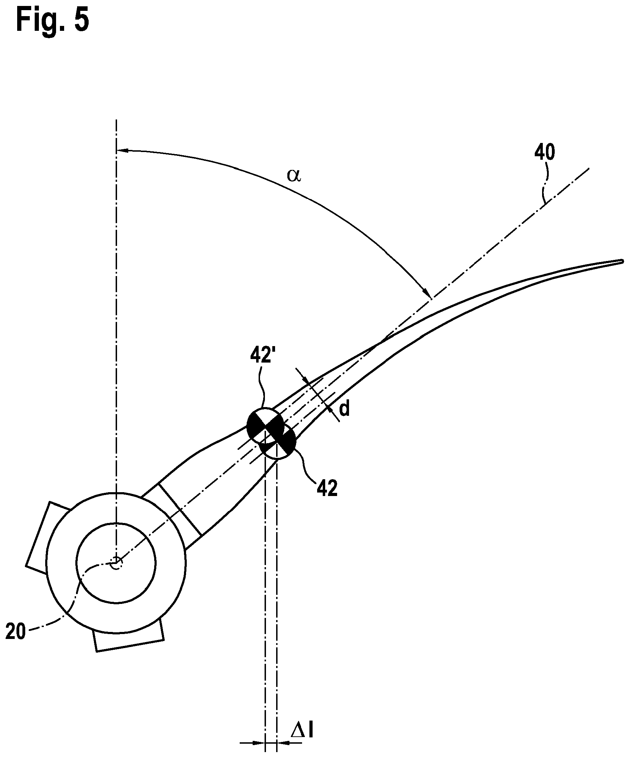

In Figur 5 ist schematisch gezeigt, wie sich das durch ein Rotorblatt 4 auf den Rotor 2 ausgeübte Drehmoment in Abhängigkeit von dem Blatteinstellwinkel verändern kann. Dieses Drehmoment ergibt sich aus dem horizontalen Abstand zwischen Rotorachse 20 und dem Schwerpunkt 42, 42' des Rotorblatts 4. Der horizontale Abstand bzw. Hebelarm ergibt sich dabei zunächst aus der Winkellage α der Drehachse 40 des Rotorblatts 4 gegenüber dem 0°-Rotorwinkel, wird jedoch durch die relative Lage des Schwerpunktes 42, 42' gegenüber der Drehachse 40 beeinflusst.

Zur Veranschaulichung sind in Figur 5 zwei beispielhafte Schwerpunktlagen eingezeichnet, wobei der Schwerpunkt 42 die Lage bei 90° Blatteinstellwinkel (also in Fahnenstellung), der Schwerpunkt 42' die Lage bei -90° Blatteinstellwinkel (also in negativer Fahnenstellung) wiedergibt. Die beiden Schwerpunktlagen liegen um den Abstand d von 40 cm - also zweimal den Abstand zwischen Schwerpunkt 42, 42' und Drehachse 40 - auseinander, was in einem Unterschied Δl des Hebelarms zur Berechnung des Drehmomentes von d x cos α führt. Durch diese mögliche Veränderung des Hebelarms um die Länge Δl lässt sich - sofern die Veränderung des Hebelarms bei den anderen Rotorblättern nicht analog durchgeführt wird - ein gravitationsbedingtes Drehmoment um die Rotorachse 20 erzeugen.

Aus den in Figur 5 dargestellten Zusammenhängen ist weiterhin ersichtlich, dass der Einfluss des Blatteinstellwinkels auf den Hebelarm für das Drehmoment im Bereich der Horizontalen nur sehr gering ist. Im dargestellten Ausführungsbeispiel fällt die Veränderung des Drehmoments durch Einstellung des Blatteinstellwinkels in einem Bereich von ±20° um die Horizontale nur sehr gering aus, sodass sie keinen oder nur wenig Einfluss auf das gravitationsbedingte Drehmoment hat.

Um zu erreichen, dass das durch die Einstellung des abweichenden Blatteinstellwinkels des ersten Rotorblatts 4' erzeugte gravitationsbedingte Drehmoment auf den Rotor 2 selbst bei Drehung des Rotors 2 immer in die gleiche Richtung zeigt, muss der Blatteinstellwinkel bei einer Lage des Rotorblatts 4' oberhalb der Horizontalen ein anderer sein, als wenn das Rotorblatt 4' unterhalb der horizontalen ist.

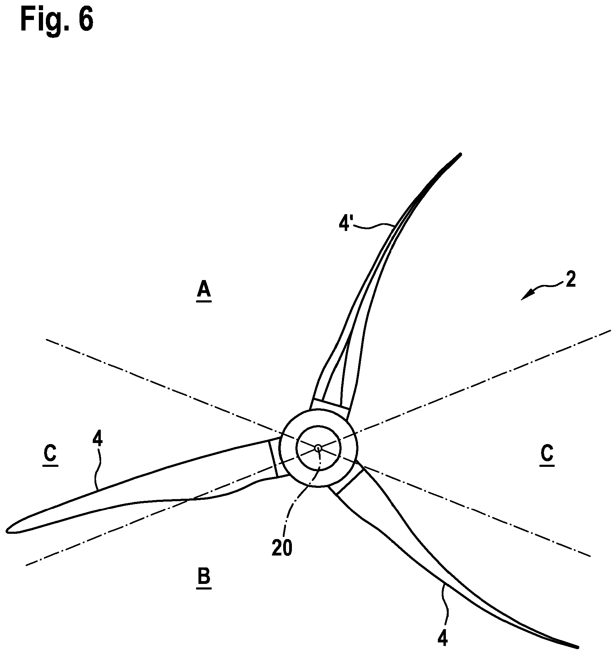

In Figur 6 ist dieser Umstand beispielhaft dargestellt. Für eine konstante Drehung des Rotors 2 im Uhrzeigersinn, kann der Blatteinstellwinkel des ersten Rotorblatts 4' im mit "A" bezeichneten Sektor -90° betragen, während er im mit "B" bezeichneten Sektor dann +90° betragen kann. Mit "C" sind in Figur 6 diejenigen Sektoren im Bereich ±20° um die Horizontale bezeichnet, in denen, wie dargelegt, der Blatteinstellwinkel eines Rotorblattes 4' nur geringen Einfluss auf das auf die Rotorachse 20 aufgebrachte Drehmoment hat, können genutzt werden, um das Rotorblatt 4' zwischen den ±90°-Stellungen zu verfahren.

In Figur 6 ist außerdem erkennbar, dass nicht nur der Blatteinstellwinkel des ersten Rotorblatts 4' planvoll verändert wird, sondern auch diejenigen der anderen Rotorblätter 4. Werden auch die anderen Rotorblätter 4 gemäß den genannten Vorgaben in den einzelnen Sektoren A, B und C eingestellt, kann das gravitationsbedingte Drehmoment gegenüber der Verstellung nur eines einzelnen Rotorblattes 4' vergrößert werden.

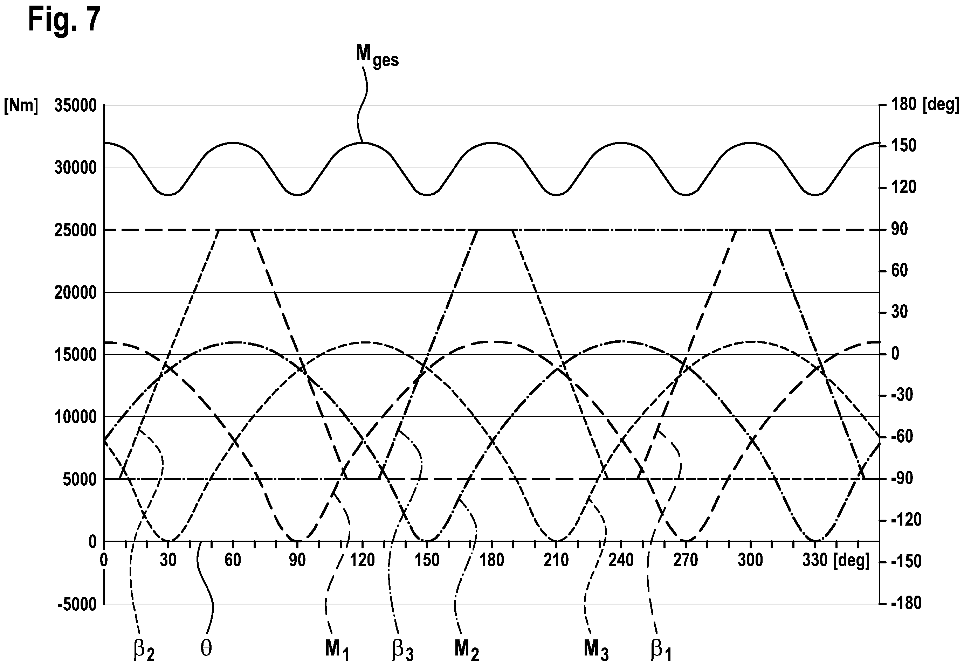

In Figur 7 ist beispielhaft in Abhängigkeit des Rotorwinkels θ dargestellt, welches gravitationsbedingte Drehmoment M_{ges} sich bei der Windenergieanlage 1 gemäß Figuren 1 und 2 erreichen lässt, wenn alle Rotorblätter 4, 4' einer Windenergieanlage 1 gemäß den in Figur 6 gezeigten Sektoren auf Blattwinkel β von ±90° eingestellt werden. Dabei zeigt das erste Rotorblatt (in Figur 7 mit Index "1" gekennzeichnet) bei einem Rotorblattwinkel θ von 0° senkrecht nach oben, während das zweite Rotorblatt (Index "2") bei 120° und das dritte Rotorblatt (Index "3") bei 240° steht (vgl. Figur 3). Bei 0° beträgt der Blatteinstellwinkel des ersten Rotorblatts β₁ daher +90°, während die Blatteinstellwinkel der beiden anderen Rotorblätter β₂, β₃ bei -90° stehen. Mit sich drehendem Rotor 2 verändert sich zwangläufig der Rotorwinkel θ und die Blatteinstellwinkel β₁, β₂, β₃ werden gemäß Figur 6 angepasst, um immer das maximale gravitationsbedingte Drehmoment M_{ges} zu erhalten.

In Figur 7 sind dabei die Drehmomentanteile M₁, M₂, M₃, welche die einzelnen Rotorblätter 4, 4' zum gravitationsbedingten Drehmoment M_{ges} beitragen, dargestellt. An diesen Anteilen M₁, M₂, M₃ ist abzulesen, dass der Einfluss eines Rotorblattes 4, 4' auf das gravitationsbedingte Drehmoment M_{ges} immer dann abnimmt, wenn sich ein Rotorblatt 4, 4' der Horizontalen nähert. In eben diesen Bereichen (Sektor C in Figur 6) wird jeweils der Blatteinstellwinkel β von +90° auf -90° oder andersherum verfahren.

Mit dem erfindungsgemäßen Verfahren lässt sich der Rotor 2 der Windenergieanlage 1 insbesondere dann verfahren, wenn Windstille herrscht. Auch aufgrund der unterschiedlichen Blatteinstellwinkel der einzelnen Rotorblätter 4, 4' im Verlauf des Verfahrens, die bei Wind zu unerwünschten Belastungen auf die Windenergieanlage führen können, ist bevorzugt, wenn die Steuerungseinheit 16 das erfindungsgemäße Verfahren nur dann beginnt, wenn die Vorrichtung 15 zur Ermittlung der Windgeschwindigkeit eine Windgeschwindigkeit von unter 3 m/s, bevorzugt von unter 2 m/s misst. Die Steuerungseinheit 16 bricht das Verfahren außerdem ab, wenn die Windgeschwindigkeit in dessen Verlauf auf über 3 m/s, bevorzugt auf über 2 m/s zunimmt. Die Steuerungseinheit 16 bricht das Verfahren außerdem ab, wenn die durch die Vorrichtung 14 ermittelte Rotordrehzahl einen vorgegebenen Maximalwert überschreitet. In beiden Fällen werden die Rotorblätter 4, 4' in Fahnenstellung - also die 90°-Stellung - verfahren.

Das erfindungsgemäße Verfahren eignet sich besonders zum Verfahren des Rotors 2 in eine gewünschte Winkelposition, bspw. um Wartungen an der Windenergieanlage 1 durchführen zu können. Dazu wird der über die Vorrichtung 13 aufgenommene momentane Rotorwinkel mit der gewünschten Winkelposition verglichen und der Rotor 2 wird mit Hilfe der Bremse 12 so abgebremst, dass der Rotor 2 in der gewünschten Position zum Stehen kommt. Gleichzeitig werden die Rotorblätter 4 in eine lastarme Position, z.B. in die Fahnenstellung verfahren, um eine unnötige Belastung der Bremse 12 zu vermeiden.

In der Praxis hat sich gezeigt, dass auch die Verformung der Rotorblätter aufgrund ihres Eigengewichtes im Gravitationsfeld einen nicht vernachlässigbaren Einfluss auf die Schwerpunktsverschiebungen hat. Insofern ist es besonders bevorzugt, diese elastischen Verformungen zur Einstellung der Blattwinkel zu berücksichtigen. Dies kann empirisch erfolgen oder durch rechnerische Simulation mit einem Berechnungsmodell, welches die gravitationsbedingte Verformung der Rotorblätter im Gravitationsfeld berücksichtigt.

## Patentansprüche

1. Verfahren zum Drehen des Rotors (2) einer Windenergieanlage (1) bei Windstille bzw. geringem, zum Antrieb des Rotors unzureichendem Wind, mit einem um eine Rotorachse (20) drehbaren Rotor (2) umfassend wenigstens drei Rotorblätter (4, 4'), deren Schwerpunkt (42) jeweils außerhalb der Drehachsen (40) zur Einstellung des Blatteinstellwinkels der einzelnen Rotorblätter (4, 4') liegt, wobei der Blatteinstellwinkel eines ersten Rotorblattes (4') zur Erzeugung einer Unwucht im Rotor (2) derart planvoll von dem Blatteinstellwinkel eines zweiten Rotorblattes (4) abweichend eingestellt wird, dass durch die Veränderung der Lage des Schwerpunktes (42) des ersten Rotorblatts (4') ein gravitationsbedingtes Drehmoment um die Rotorachse (20) erzeugt wird.

2. Verfahren nach Anspruch 1,
**dadurch gekennzeichnet, dass**
das erzeugte gravitationsbedingte Drehmoment um die Rotorachse ausreichend ist, ein aufgrund der Reibungskräfte im Triebstrang bestehendes Losbrechmoment zu überwinden.

3. Verfahren nach Anspruch 1 oder 2,
**dadurch gekennzeichnet, dass**
der Blatteinstellwinkel wenigstens des ersten Rotorblatts (4') in Abhängigkeit des Rotorwinkels derart verändert wird, dass das sich aus der Unwucht ergebende Drehmoment in eine vorgegebene Richtung um die Rotorachse (20) wirkt.

4. Verfahren nach einem der vorhergehenden Ansprüche,
**dadurch gekennzeichnet, dass**
die Drehachse (40) zur Einstellung des Blatteinstellwinkels des ersten Rotorblatts (4') zur Erzeugung einer Unwucht um wenigstens 5°, vorzugsweise um wenigstens 10°, weiter vorzugsweise wenigstens 20° von der Horizontalen abweicht.

5. Verfahren nach einem der vorhergehenden Ansprüche,
**dadurch gekennzeichnet, dass**
die Blatteinstellwinkel von wenigstens zwei, vorzugsweise aller Rotorblätter (4, 4') in Abhängigkeit des Rotorwinkels derart verändert werden, dass die Unwucht des Rotors (2) gegenüber der Veränderung des Anstellwinkels lediglich des ersten Rotorblattes (4') vergrößert ist.

6. Verfahren nach einem der vorhergehenden Ansprüche,
**dadurch gekennzeichnet, dass**
zum Verfahren des Rotors (2) in eine vorgegebene Winkelposition der Rotorwinkel überwacht wird und die Unwucht im Rotor (2) vor oder bei Erreichen der vorgegebenen Winkelposition reduziert oder eliminiert und/oder der Rotor (2) durch eine Bremse (16) in der vorgegebenen Winkelposition angehalten wird.

7. Verfahren nach einem der vorhergehenden Ansprüche,
**dadurch gekennzeichnet, dass**
vor und/oder während der Durchführung des Verfahrens die Windgeschwindigkeit an der Windenergieanlage (1) überwacht wird, und das Verfahren bei Windgeschwindigkeiten über 3 m/s, vorzugsweise über 2 m/s, weiter vorzugsweise über 1 m/s abgebrochen wird.

8. Verfahren nach einem der vorhergehenden Ansprüche,
**dadurch gekennzeichnet, dass**
vor und/oder während der Durchführung des Verfahrens die Drehgeschwindigkeit des Rotors (2) überwacht wird und das Verfahren bei Überschreiten einer vorgegebenen Maximalgeschwindigkeit abgebrochen wird.

9. Verfahren nach einem der vorhergehenden Ansprüche,
**dadurch gekennzeichnet, dass**
zum Eliminieren der Unwucht im Rotor (2) und/oder bei Abbruch des Verfahrens die Anstellwinkel der Rotorblätter (4, 4') identisch, vorzugsweise in Fahnenstellung eingestellt werden.

10. Verfahren nach einem der vorhergehenden Ansprüche,
**dadurch gekennzeichnet, dass**
zur Einstellung des Blatteinstellwinkels der einzelnen Rotorblätter (4, 4') elektrische Blattverstellantriebe (41) vorgesehen sind.

11. Verfahren nach einem der vorhergehenden Ansprüche,
**dadurch gekennzeichnet, dass**
die Rotorblätter (4, 4') vorgebogene Rotorblätter sind.

12. Computerprogrammprodukt umfassend Programmteile, welche, wenn geladen in einem Computer, und zwar eine Steuerungseinheit (16) einer Windenergieanlage (1), bewirken, dass die Steuerungseinheit (16) ein Verfahren nach einem der vorhergehenden Ansprüche ausführt.

13. Windenergieanlage (1) mit einem um eine Rotorachse (20) drehbaren Rotor (2) umfassend wenigstens drei Rotorblätter (4, 4'), deren Schwerpunkt (42) jeweils außerhalb der Drehachsen (40) zur Einstellung des Blatteinstellwinkels der einzelnen Rotorblätter (4, 4') liegt, und einer Steuerungseinheit (16), **dadurch gekennzeichnet, dass** die Steuerungseinheit zur Durchführung des Verfahrens nach einem der Ansprüche 1 bis 11 ausgebildet ist.

## Claims

1. Method for rotating the rotor (2) of a wind power plant (1) in the case of calm or low wind which is unsuitable for driving the rotor, with a rotor (2) which can be rotated about a rotor axis (20), comprising at least three rotor blades (4, 4'), the centre of gravity (42) of which lies in each case outside the rotational axes (40) for setting the blade setting angle of the individual rotor blades (4, 4'), the blade setting angle of a first rotor blade (4') being set so as to deviate systematically from the blade setting angle of a second rotor blade (4) in order to generate an unbalance in the rotor (2) in such a way that a gravitation-induced torque about the rotor axis (20) is generated by way of the change of the position of the centre of gravity (42) of the first rotor blade (4').

2. Method according to Claim 1, **characterized in that** the generated gravitation-induced torque about the rotor axis is sufficient to overcome a breakaway torque which exists in the drive train on account of the friction forces.

3. Method according to Claim 1 or 2, **characterized in that** the blade setting angle at least of the first rotor blade (4') is changed in a manner which is dependent on the rotor angle in such a way that the torque which results from the unbalance acts in a predefined direction about the rotor axis (20).

4. Method according to one of the preceding claims, **characterized in that** the rotational axis (40) for setting the blade setting angle of the first rotor blade (4') for generating an unbalance differs from the horizontal by at least 5°, preferably by at least 10°, further preferably at least 20°.

5. Method according to one of the preceding claims, **characterized in that** the blade setting angles of at least two, preferably all, rotor blades (4, 4') are changed in a manner which is dependent on the rotor angle in such a way that the unbalance of the rotor (2) is increased in comparison with the change of the angle of attack merely of the first rotor blade (4').

6. Method according to one of the preceding claims, **characterized in that**, in order to move the rotor (2) into a predefined angular position, the rotor angle is monitored, and the unbalance in the rotor (2) is reduced or eliminated before or when the predefined angular position is reached, and/or the rotor (2) is stopped at the predefined angular position by way of a brake (16).

7. Method according to one of the preceding claims, **characterized in that** the wind speed at the wind power plant (1) is monitored before and/or while the method is carried out, and the method is stopped in the case of wind speeds above 3 m/s, preferably above 2 m/s, further preferably above 1 m/s.

8. Method according to one of the preceding claims, **characterized in that** the rotational speed of the rotor (2) is monitored before and/or while the method is carried out, and the method is stopped in the case of a predefined maximum speed being exceeded.

9. Method according to one of the preceding claims, **characterized in that**, in order to eliminate the unbalance in the rotor (2) and/or in the case of stopping of the method, the angles of attack of the rotor blades (4, 4') are set to be identical, preferably in a vane position.

10. Method according to one of the preceding claims, **characterized in that** electric blade adjustment drives (41) are provided for setting the blade setting angle of the individual rotor blades (4, 4').

11. Method according to one of the preceding claims, **characterized in that** the rotor blades (4, 4') are pre-curved rotor blades.

12. Computer program product comprising program parts which, if loaded in a computer, to be precise a control unit (16) of a wind power plant (1), bring it about that the control unit (16) carries out a method according to one of the preceding claims.

13. Wind power plant (1) with a rotor (2) which can be rotated about a rotor axis (20), comprising at least three rotor blades (4, 4'), the centre of gravity (42) of which lies in each case outside the rotational axes (40) for setting the blade setting angle of the individual rotor blades (4, 4'), and a control unit (16), **characterized in that** the control unit is configured for carrying out the method according to one of Claims 1 to 11.

## Revendications

1. Procédé permettant de faire tourner le rotor (2) d'une éolienne (1) en cas de vent de vitesse nulle ou de vent faible insuffisant pour l'entraînement du rotor, comportant un rotor (2) pouvant tourner autour d'un axe de rotor (20) et comprenant au moins trois pales de rotor (4, 4') dont le centre de gravité (42) se situe respectivement à l'extérieur des axes de rotation (40) pour le réglage de l'angle de calage des pales de rotor individuelles (4, 4'),
l'angle de calage d'une première pale de rotor (4') étant réglé systématiquement de manière à différer de l'angle de calage d'une deuxième pale de rotor (4) pour la génération d'un déséquilibre dans le rotor (2), de telle sorte qu'un couple, dû à la gravitation, autour de l'axe de rotation (20) soit généré par la modification de la position du centre de gravité (42) de la première pale de rotor (4').

2. Procédé selon la revendication 1,
**caractérisé en ce que**
le couple dû à la gravité généré autour de l'axe de rotation est suffisant pour surmonter un couple de démarrage existant dans la chaîne cinématique du fait des forces de friction.

3. Procédé selon la revendication 1 ou 2,
**caractérisé en ce que**
l'angle de calage d'au moins la première pale de rotor (4') est modifié en fonction de l'angle de rotor de telle sorte que le couple résultant du déséquilibre agisse dans un sens prédéfini autour de l'axe de rotor (20).

4. Procédé selon l'une des revendications précédentes, **caractérisé en ce que**
l'angle de rotation (40) pour le réglage de l'angle de calage de la première pale de rotor (4') pour la génération d'un déséquilibre diffère de l'horizontale d'au moins 5°, de préférence d'au moins 10°, de manière particulièrement préférée d'au moins 20°.

5. Procédé selon l'une des revendications précédentes, **caractérisé en ce que**
l'angle de calage d'au moins deux, de préférence de toutes les pales de rotor (4, 4') est modifié en fonction de l'angle de rotor de telle sorte que le déséquilibre du rotor (2) soit augmenté par rapport à la modification de l'angle d'attaque de seulement la première pale de rotor (4').

6. Procédé selon l'une des revendications précédentes, **caractérisé en ce que**
pour le déplacement du rotor (2) dans une position angulaire prédéfinie, l'angle de rotor est surveillé et le déséquilibre dans le rotor (2) est réduit ou éliminé avant que la position angulaire prédéfinie ne soit atteinte ou lorsqu'elle est atteinte et/ou le rotor (2) est arrêté dans la position angulaire prédéfinie par un frein (16) .

7. Procédé selon l'une des revendications précédentes, **caractérisé en ce**
**qu'**avant et/ou pendant la mise en œuvre du procédé, la vitesse du vent au niveau de l'éolienne (1) est surveillée, et le procédé est interrompu en cas de vitesses du vent supérieures à 3 m/s, de préférence supérieures à 2 m/s, de manière particulièrement préférée supérieures à 1 m/s.

8. Procédé selon l'une des revendications précédentes, **caractérisé en ce**
**qu'**avant et/ou pendant la mise en œuvre du procédé, la vitesse de rotation du rotor (2) est surveillée, et le procédé est interrompu en cas de dépassement d'une vitesse maximale prédéfinie.

9. Procédé selon l'une des revendications précédentes, **caractérisé en ce que**
pour l'élimination du déséquilibre dans le rotor (2) et/ou en cas d'interruption du procédé, les angles d'attaque des pales de rotor (4, 4') sont réglés de manière identique, de préférence en position en drapeau.

10. Procédé selon l'une des revendications précédentes, **caractérisé en ce que**
des entraînements de réglage de pale électriques (41) sont prévus pour le réglage de l'angle de calage des pales de rotor individuelles (4, 4').

11. Procédé selon l'une des revendications précédentes, **caractérisé en ce que**
les pales de rotor (4, 4') sont des pales de rotor précintrées.

12. Produit-programme d'ordinateur comportant des parties de programme qui, lorsqu'elles sont chargées dans un ordinateur, à savoir dans une unité de commande (16) d'une éolienne (1), amènent l'unité de commande (16) à mettre en œuvre un procédé selon l'une des revendications précédentes.

13. Éolienne (1) comportant un rotor (2) pouvant tourner autour d'un axe de rotor (20) et comprenant au moins trois pales de rotor (4, 4') dont le centre de gravité (42) se situe respectivement à l'extérieur des axes de rotation (40) pour le réglage de l'angle de calage des pales de rotor individuelles (4, 4'), et une unité de commande (16), **caractérisée en ce que** l'unité de commande est conçue pour la mise en œuvre du procédé selon l'une des revendications 1 à 11.
